Europäisches Patentamt

European Patent Office

Office européen des brevets

(19)

(11) Veröffentlichungsnummer: **0 197 126**
**B1**

(12) # EUROPÄISCHE PATENTSCHRIFT

(45) Veröffentlichungstag der Patentschrift:
06.09.89

(51) Int. Cl.⁴: **H 04 N 5/92**

(21) Anmeldenummer: 85905212.8

(22) Anmeldetag: 01.10.85

(86) Internationale Anmeldenummer:
**PCT/EP 85/00505**

(87) Internationale Veröffentlichungsnummer:
**WO 86/02516 (24.04.86 Gazette 86/9)**

(54) **VERFAHREN ZUR AUFZEICHNUNG UND/ODER WIEDERGABE DIGITAL KODIERTER SIGNALE.**

(30) Priorität: 10.10.84 DE 3437182

(43) Veröffentlichungstag der Anmeldung:
15.10.86 Patentblatt 86/42

(45) Bekanntmachung des Hinweises auf die Patenterteilung:
06.09.89 Patentblatt 89/36

(84) Benannte Vertragsstaaten:
AT BE CH DE FR GB IT LI LU NL SE

(56) Entgegenhaltungen:
DE-A- 2 559 263
US-A- 4 077 053
US-A- 4 217 609
US-A- 4 386 366
US-A- 4 468 708

The Radio and Electronic Engineer, Band 48, Nr.6, Juni 1978, London (GB) R.C.Nicol: 'Interfacing intraframe d.p.c.m. with conditional replenishment coding for viewphone signals', Seiten 277 bis 284.
SMPTE Journal, Bank 89, Nr.6, Juni 1980, Scarsdale, New York (US) J.Limb et al.: 'An interframe coding Technique for Broadcast Television', Seiten 451 bis 457.
Patents Abstracts of Japan, Band 7, Nr.8, (E-152)(1153) 13. Januar 1983 & JP, A, 57166785

(73) Patentinhaber: TELEFUNKEN Fernseh und Rundfunk GmbH, Göttinger Chaussee 76,
D-3000 Hannover 91 (DE)

(72) Erfinder: OBERJATZAS, Günter, Langen Kampstr. 42,
D-3013 Barsinghausen (DE)
Erfinder: KEESEN, Werner, Adlerstr. 25,
D-4130 Moers 1 (DE)
Erfinder: CATROS, Jean-Yves, 28 rue Papu,
F-35000 Rennes (FR)
Erfinder: RICHARD, Christian, Jacques, 12 rue des Prés Hauts, F-35530 Brece (FR)

(74) Vertreter: Einsel, Robert, Dipl.-Ing., TELEFUNKEN Fernseh und Rundfunk GmbH Göttinger Chaussee 76,
D-3000 Hannover 91 (DE)

(56) Entgegenhaltungen: (Fortsetzung)
NTC '77 National Telecommunications Conference Record, Bank 1, 5-7. Dezember 1977, Los Angeles, veröffentlicht IEEE, New York (US) P.Pirsch: 'Block coding of color video signals', Seiten 10:5-1 bis 10:5-5.
Patents Abstracts of Japan, Band 4, Nr. 170, (E.35)(652) 22. November 1980, & JP,A, 55117387
IEEE Transactions on Communications, Band COM-29, Nr. 12, Dezember 1981, New York (US) H. Yamamoto et al.: '30Mbit/s Codec for the NTSC color TV signal using an interfield-intrafield adaptive prediction', Seiten 1859 bis 1867.
Tagungsband der 10. Jahrestagungen der FKTG, Vortrag 28, 13-17. September 1982, München (DE) Westerkamp et al.: 'Digitale Magnetbandaufzeichnung von video- und audiosignalen auf einem videocasettenrecorder', Seiten 526 bis 548.

## Beschreibung

Die Erfindung betrifft ein Verfahren zur Aufzeichnung und/oder Wiedergabe digital kodierter Signale, insbesondere digitaler Videosignale auf Magnetband, mit einer zur tatsächlichen benötigten Datenrate zur Wiedergabe eines Bildes reduzierten Datenrate, die unter anderem durch Interframe- und Intraframekodierung erzielt wird (siehe z..B. Patents Abstracts of Japan, Band 7, Nr. 8, (E-152) (1153), 13.1.1983, & JP-A-57 166 785).

Zur Aufzeichnung digitaler Farbbilder, die etwa 216 Mbit/s Rohdaten enthalten, ist es für einen schmalbandigen Kanal, wie ihn z. B. ein Videorecorder darstellt, erforderlich, die aufzuzeichnenden Daten zu reduzieren. Für die Datenreduktion sind unter anderem folgende Verfahren bekannt.

1. Intraframekodierte Bilder. Hierbei wird der Inhalt eines Bildes derart reduziert, dass die zu übertragende Information um redudante und/oder irrelevante Anteile reduziert wird.

2. Interframekodierte Bilder. Bei dieser Kodierung werden nur die Unterschiede aufeinanderfolgender Bilder aufgezeichnet.

Der Nachteil der intraframekodierten Aufzeichnung liegt darin, dass bei einer geforderten aufzuzeichnenden Datenrate von 10-15 Mbit/s die Bildqualität sehr schlecht ist. Es wird weniger als 10% der Information aufgezeichnet.

Der Nachteil der interframekodierten Aufzeichnung liegt darin, dass es nicht möglich ist, an einer beliebigen Stelle der Aufzeichnung mit der Wiedergabe zu beginnen, da die Information nur relativ ist. Es fehlt das Ausgangsbild.

Der Erfindung liegt die Aufgabe zugrunde, ein Aufzeichnungsverfahren anzugeben, dass die Vorzüge der Datenreduktion durch Intraframe- und Interframekodierung vereint und es gleichzeitig ermöglicht, einen schnellen Suchlauf sowie Insertschnitt durchzuführen.

Diese Aufgabe wird durch die im Anspruch 1 beschriebene Lösung gelöst. Vorteilhafte Weiterbildungen der Erfindung sind in den Unteransprüchen beschrieben.

Erfindungsgemäss wird eine Bildsequenz derart kodiert, dass zu Beginn der Bildsequenz ein intraframekodiertes Bild aufgezeichnet wird, dem sich eine Anzahl interframekodierter Bilder anschliessen. Das intraframekodierte Bild kann sowohl eine feste als auch variable Blocklänge aufweisen. Die interframekodierten Bilder weisen eine variable Blocklänge auf. Die Bildsequenz beinhaltet eine konstante oder variable Anzahl kodierter Bilder.

Ein Ausführungsbeispiel der Erfindung wird anhand der Zeichnung erläutert. Darin zeigt die Figur einen Aufbau einer Bildsequenz.

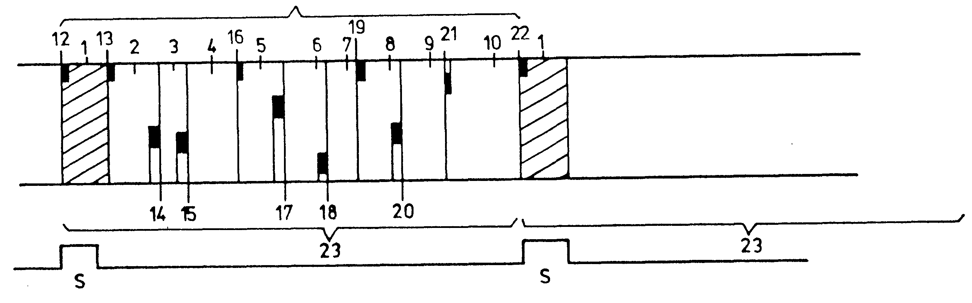

Eine Bildsequenz 23 besteht aus einem intraframekodierten Bild 1 und einer Anzahl interframekodierter Bilder 2-10. Jedes Bild 1-10 hat zu Beginn ein Bildsynchronsignal 12-21. Die Blocklänge des intraframekodierten Bildes 1 ist konstant. Die Blocklänge der interframekodierten Bilder 2-10 ist variabel und hängt von der Informationsdifferenz aufeinanderfolgender Bilder ab.

Zu Beginn einer jeden Bildsequenz 23 wird das intraframekodierte Bild 1 durch eine Intraframekennung S gekennzeichnet.

Durch diese Aufzeichnungsverfahren ist es möglich, einen schnellen Suchlauf in beiden Richtungen durchzuführen. Es wird dabei bei jeder n-ten Intraframekennung ein intraframekodiertes Bild abgetastet, wobei n eine ganze Zahl ist.

Weiterhin ist ein Insertschnitt möglich. Jeder Schnitt beginnt mit und endet vor einem intraframekodierten Bild.

## Patentansprüche

1. Verfahren zur Aufzeichnung und/oder Wiedergabe digital codierter Signale, insbesondere digitaler Videosignale auf Magnetband, mit einer zur tatsächlich benötigten Datenrate zur Wiedergabe eines Bildes reduzierten Datenrate, die unter anderem durch Interframe- und Intraframekodierung erzielt wird, dadurch gekennzeichnet, dass der Beginn einer Bildsequenz (23) durch ein intraframekodiertes Bild (1) mit fester oder variabler Blocklänge bestimmt wird, und dass sich daran eine Anzahl interframekodierter Bilder mit einer festen Anzahl von Bildern und variabler Blocklänge oder einer variablen Anzahl von Bildern und einer festen Blocklänge anschliessen.

2. Verfahren nach Anspruch 1, dadurch gekennzeichnet, dass der Beginn einer Bildsequenz (22) durch eine Intraframekennung (S) angezeigt wird.

3. Verfahren nach Anspruch 2, dadurch gekennzeichnet, dass die Intraframekennung (S) auf einer eigenen Spur aufgezeichnet ist.

4. Verfahren nach Anspruch 1, dadurch gekennzeichnet, dass jedes Bild (1-10) zu Beginn ein Bildsynchronsignal (12-21) aufweist.

## Claims

1. A method of recording and/or playing back digitally coded signals, more particularly digital video signals on magnetic tape, having a reduced data rate with respect to the data rate actually required for playing back a picture, which is achieved by among other things inter frame and intra frame coding, characterised in that the beginning of a picture sequence (23) is determined by an intra frame coded picture (1) with a fixed or variable block length, and that a number of inter frame coded pictures follows on from that with a fixed number of pictures and variable block length or a variable number of pictures and a fixed block length.

2. A method according to claim 1, characterised in that the beginning of a picture sequence (22) is indicated by an intra frame identification (S).

3. A method according to claim 2, characterised in that the intra frame identification (S) is recorded on its own track.

4. A method according to claim 1, characterised in that each picture (1–10) has a picture synchronous signal (12–21) at the beginning.

**Revendications**

1. Procédé d'enregistrement et/ou de lecture de signaux codés numériques, notamment de signaux vidéo numérique sur une bande magnétique, avec une cadence de données réduite par rapport à la cadence de données effectivement nécessaire pour la lecture d'une image, et obtenue notamment au moyen d'un codage entre trames et d'un codage interne aux trames, caractérisé en ce que le début d'une séquence d'images (23) est déterminé par une image (1), codée selon un codage interne aux trames et possédant une longueur de bloc fixe ou variable, et qu'à cette image se raccordent des images, codées selon un codage entre trames et incluant un nombre fixe d'images et une longueur de bloc variable ou un nombre variable d'images et une longueur de bloc fixe.

2. Procédé selon la revendication 1, caractérisé en ce que le début d'une séquence d'images (22) est affiché par un indicatif (S) interne aux trames.

3. Procédé selon la revendication 2, caractérisé en ce que l'indicatif (S) interne aux trames est enregistré sur une piste particulière.

4. Procédé selon la revendication 1, caractérisé en ce que chaque image (1–10) comporte, à son début, un signal de synchronisation d'image (12–21).